# EUROPÄISCHE PATENTSCHRIFT

(11) **EP 1 078 855 B1**
(45) Veröffentlichungstag und Bekanntmachung des Hinweises auf die Patenterteilung: **11.09.2002**
(21) Anmeldenummer: 00810712.0
(22) Anmeldetag: 10.08.2000
(51) Int. Cl.: B65B 23/16, B65B 35/46, B65G 69/16, B65G 29/02

(54) **VORRICHTUNG ZUM ZUFÜHREN VON PRODUKTEGRUPPEN, INSBESONDERE BISKUITS, IN VERPACKUNGSBEHÄLTER**
APPARATUS FOR INTRODUCING GROUPS OF PRODUCTS, IN PARTICULAR BISCUITS, INTO PACKAGING CONTAINERS
DISPOSITIF POUR INTRODUIRE DES GROUPES DE PRODUITS, EN PARTICULIER DES BISCUITS, DANS DES RECIPIENTS D' EMBALLAGE

(30) Priorität: 23.08.1999 CH 154299
(43) Veröffentlichungstag der Anmeldung: 28.02.2001
(73) Patentinhaber: SIG Pack Systems AG, 8222 Beringen (CH)
(72) Erfinder: Walz, Theo, 8213 Neunkirch (CH)
(74) Vertreter: Münch, Otto, Dipl.-Ing.

(56) Entgegenhaltungen:
- CH-A- 426 611
- US-A- 3 323 281
- US-A- 3 732 969
- US-A- 4 194 343

## Beschreibung

Aus der CH-A-568905 ist eine Vorrichtung zum Bilden von Gruppen von aneinandergereihten, flachen, hochkantstehenden Produkten, insbesondere Biscuits bekannt. Die aus einem langen Stapel abgetrennte Gruppe wird auf zwei Stäben getragen. Nach Absenken in eine horizontale Stellung werden die Stäbe auseinanderbewegt, so dass die Gruppe auf einen darunter angeordneten Schieber fällt.

Der vorliegenden Erfindung liegt die Aufgabe zugrunde, eine Vorrichtung der obigen Art anzugeben, mit welcher Gruppen von flach aneinanderliegenden, scheibenförmigen Produkten mit hoher Zuverlässigkeit in Behälter eingebracht werden können. Diese Aufgabe wird durch die Merkmalskombination der Ansprüche gelöst.

Nachfolgend werden Ausführungsbeispiele der Erfindung anhand der Zeichnungen erläutert. Darin zeigt:
- Figuren 1 + 2: Seitenansichten der Vorrichtung in zwei Betriebsstellungen,
- Figur 3: eine Stirnansicht,
- Figuren 4a bis 4f: die Betriebsweise der Einfüllvorrichtung,
- Figuren 5 bis 8: verschiedene Ausführungsvarianten,
- Figur 9: eine Ausführungsform mit mehreren nebeneinander angeordneten Einfüllstationen.

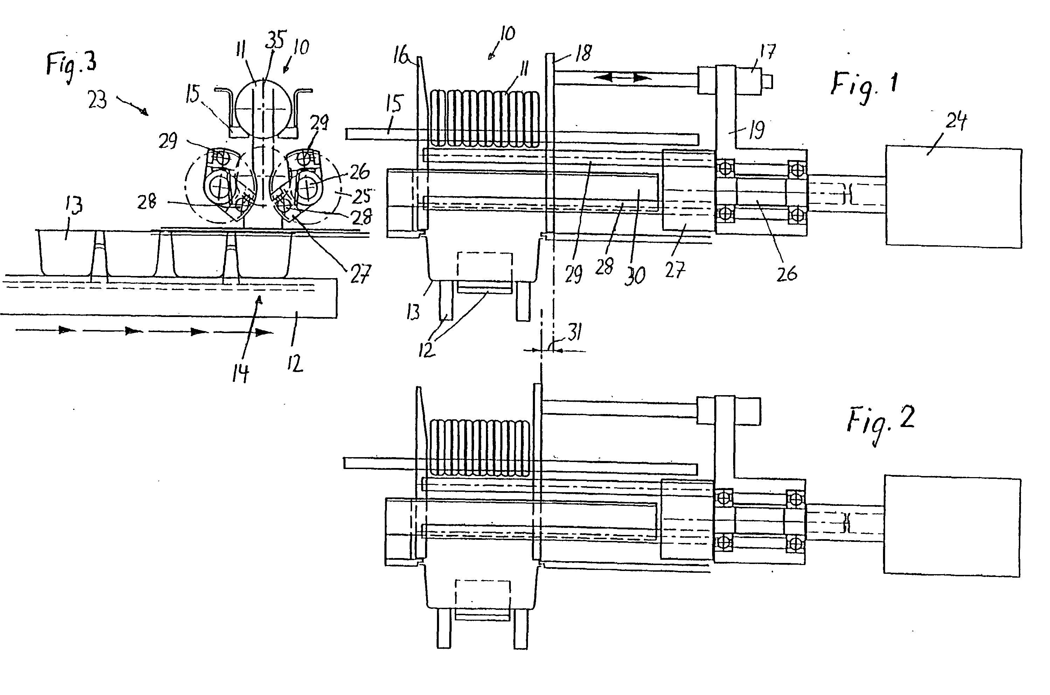

Die Vorrichtung nach Figuren 1 bis 5 umfasst einen nicht dargestellten Zufuhrförderer für Gruppen 10 von hochkantstehenden, flach aneinanderliegenden Produkten 11, zum Beispiel Biscuits. Der Zufuhrförderer kann zum Beispiel gemäss CH-A-568905 ausgebildet sein. Auf einem weiteren Förderer 12 werden die zu beladenden Behälter 13 (Trays) in eine Ladeposition 14 unterhalb von zwei einander gegenüberliegenden Trägern 15 der Gruppe 10 gefördert. Die Gruppe 10 wird durch eine horizontal verstellbare Stützwand 16 und eine mittels eines Linearmotors 17 mit Wegrückführung horizontal bewegbare Führungswand 18 gestützt und in die Position genau oberhalb der Öffnung des Behälters 13 zentriert. Der Linearmotor 17 ist an einem Gehäuse 19 befestigt.

Die Vorrichtung umfasst ferner eine Transporteinrichtung 23. Diese umfasst zwei zu den Trägern 15 parallele, durch einen gemeinsamen Servomotor 24 und ein Getriebe 25 gegenläufig angetriebene Wellen 26, die im Gehäuse 19 drehbar gelagert sind. Auf den Wellen 26 sind Tragarme 27 im Winkel um die Wellenachse einstellbar montiert. Die Tragarme 27 tragen als Haltemittel ausgebildete Stäbe 28, 29. Diese sind parallel zu den Wellenachsen und zu den Trägern 15.

Innerhalb der Umlaufbahn der Stäbe 28, 29 sind am Gehäuse 19 seitlich einstellbare Führungsmittel 30 in Form von abgekröpften, parallel zu den Trägern 15 verlaufenden Platten montiert. Die Wellen 26 und die Umlaufbahnen der Stäbe 28, 29 sind symmetrisch zu einer vertikalen Mittelebene 35 durch die Gruppe 10.

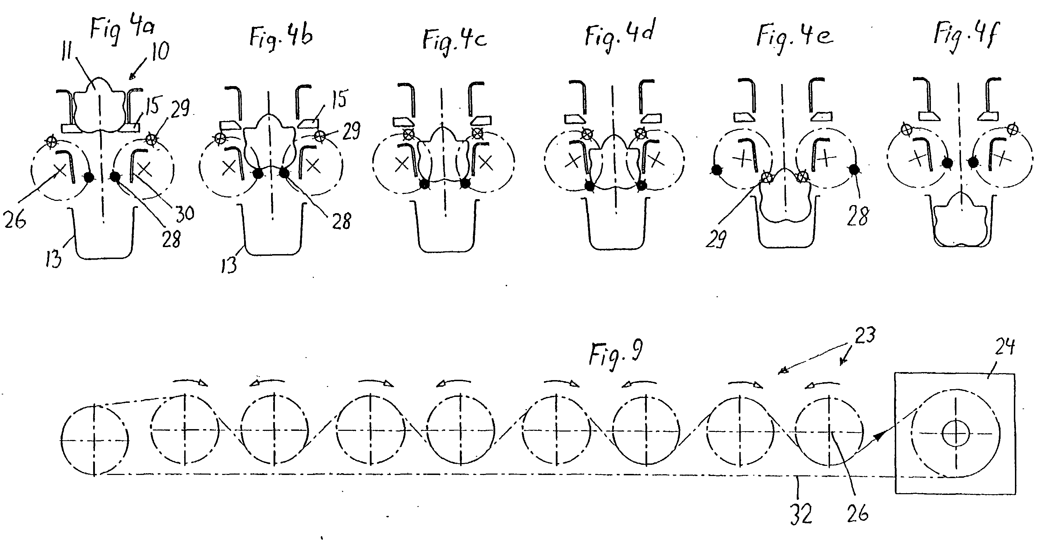

Zum Einfüllen der Gruppe 10 werden die Träger 15 seitlich auseinanderbewegt (Figur 4b), so dass die Gruppe 10 auf die unteren Stäbe 28 fällt, wobei sie von den Platten 30 geführt ist. Gleichzeitig wird die Führungswand 18 um einen Betrag 31 derart verschoben, dass die Gruppe 10 genau über dem Behälter 13 zentriert ist (Figur 2). Im nächsten Schritt werden die Wellen 26 gegenläufig gedreht (Figuren 4c bis 4e). Die unteren Stäbe 28 gleiten dabei seitlich unter der Gruppe 10 weg. Falls ein Produkt 11 an den Behälterwänden leicht klemmen sollte, wird es von den oberen Stäben 29 in den Behälter 13 eingeschoben (Figur 4e). Anschliessend werden die Wellen 26 in die Grundstellung zurückgedreht oder in die Ausgangsposition nach Figur 4a weitergedreht, die Behälter 13 um einen Schritt vorgeschoben, worauf der nächste Einfüllvorgang beginnt.

Mit der beschriebenen Vorrichtung wird ein sicheres Einfüllen von Produktegruppen mit sehr geringen Ausschussraten, eine hohe Leistung bei schonender Handhabung der Produkte ermöglicht. Die erfindungsgemässe Vorrichtung ist einfach aufgebaut und kostengünstig in der Herstellung und im Betrieb.

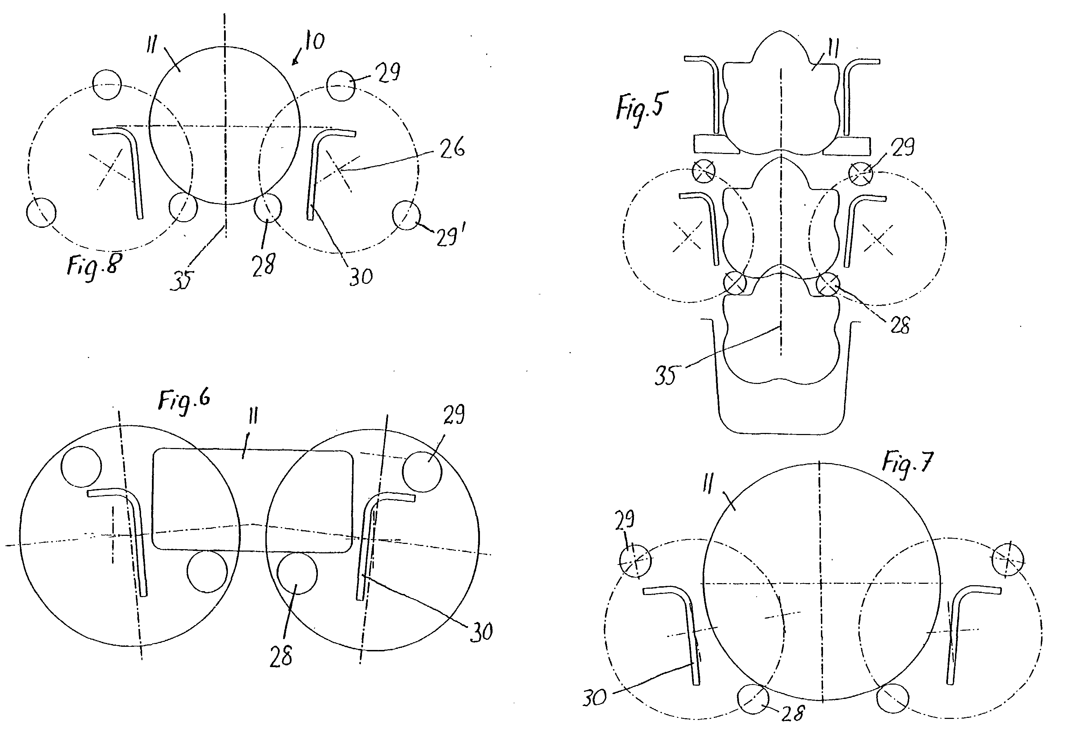

Figur 6 zeigt die Vorrichtung beim Einfüllen andersgeformter Produkte 11. Wie ersichtlich sind dabei die Führungsplatten 30 und die Winkelstellung der Stäbe 28, 29 gegeneinander anders eingestellt als in der Darstellung nach Figur 5. Figur 7 zeigt eine Variante, in welcher die Stäbe 28, 29 bezüglich den Wellenachsen um 180 Grad gegeneinander versetzt sind und abwechselnd als Stützstäbe und als Einschiebestäbe wirken. Die Wellen 26 drehen also jeweils um 180 Grad und immer im selben Drehsinn. Diese Variante hat den Vorteil, dass die Steuereinrichtung zum Ansteuern des Motors 24 vereinfacht wird. Bei der Variante nach Figur 8 ist dieselbe Idee verwirklicht, jedoch mit drei Stütz- bzw. Einschiebestäben 28, 29, 29' pro Welle 26.

Figur 9 zeigt schematisch eine Variante, bei welcher mehrere Transporteinrichtungen 23 nebeneinander angeordnet sind zum gleichzeitigen Befüllen mehrerer nebeneinander angeordneter Behälter. Sämtliche Wellen 26 sind über einen doppelseitigen Zahnriemen 32 vom gemeinsamen Servomotor 24 angetrieben. Mit dieser Variante kann bei relativ bescheidenem Mehraufwand eine erhebliche Leistungssteigerung erreicht werden.

## Patentansprüche

1. Vorrichtung an einer Verpackungsmaschine zum Einlegen von Gruppen (10) hochkantstehender, scheibenförmiger Produkte (11), insbesondere Biscuits, in Behälter (13), umfassend stirnseitige Stützmittel (16, 18), die an die Gruppenlänge anpasspar sind, **dadurch gekennzeichnet, daß** die Vorrichtung eine Transporteinrichtung (23) aufweist, die sich längs der Produktegruppe erstreckende, bewegliche Haltemittel (28, 29) umfasst, wobei erste Haltemittel (28) in einer ersten Phase die Produktegruppe (10) bei der Abwärtsbewegung tragen und zweite Haltemittel (29) die Produktegruppe (10) in ihrem oberen Bereich während mindestens einem Teil der Abwärtsbewegung führen und nach unten schieben können.

2. Vorrichtung nach Anspruch 1, wobei die Haltemittel (28, 29) abwechslungsweise unten die tragende bzw. oben die führende Funktion ausüben.

3. Vorrichtung nach Anspruch 1 oder 2, wobei die Haltemittel (28, 29) stabförmig ausgebildet sind.

4. Vorrichtung nach einem der Ansprüche 1 bis 3, wobei mindestens zwei Haltemittel(28, 29) auf je einer geschlossenen Umlaufbahn bewegbar sind.

5. Vorrichtung nach Anspruch 4, wobei die Haltemittel (28, 29) beidseitig der Produktegruppe (10) angeordnet sind, die Umlaufbahnen symmetrisch zu einer vertikalen Mittelebene (35) durch die Produktegruppe angeordnet sind und entsprechende Haltemittel (28, 29) jeder Umlaufbahn zu dieser Mittelebene (35) symmetrische Bewegungen ausführen.

6. Vorrichtung nach Anspruch 4 oder 5, wobei die einer Umlaufbahn zugeordneten Haltemittel (28, 29) relativ zueinander bewegbar sind.

7. Vorrichtung nach einem der Ansprüche 4 bis 6, wobei die Umlaufbahnen kreisförmig sind.

8. Vorrichtung nach einem der Ansprüche 1 bis 7, wobei längsseitig der Produktegruppen (10) Führungsmittel (30) angeordnet sind.

9. Vorrichtung nach einem der Ansprüche 1 bis 8, wobei die Haltemittel (28, 29) durch einen Servomotor oder durch einen Motor mit Zahnriemen angetrieben sind.

10. Vorrichtung nach einem der Ansprüche 1 bis 9, wobei mehrere Transporteinrichtungen (23) nebeneinander angeordnet sind zum gleichzeitigen Befüllen mehrerer nebeneinander angeordneter Behälter (13) mit je einer Produktegruppe (10).

## Claims

1. Apparatus in a packaging machine for introducing groups (10) of disc-shaped products (11) which are positioned on edge, in particular biscuits, into containers (13), comprising end-side supporting means (16, 18) which can be adapted to the group length, **characterized in that** the apparatus has a transporting arrangement (23) which comprises movable retaining means (28, 29) extending along the product group, it being the case that first retaining means (28), in a first phase, support the product group (10) during the downward movement and second retaining means (29) guide the product group (10) in its top region during at least part of the downward movement, and can push the group downwards.

2. Apparatus according to Claim 1, it being the case that the retaining means (28, 29) alternately perform the supporting function at the bottom and the guiding function at the top.

3. Apparatus according to Claim 1 or 2, it being the case that the retaining means (28, 29) are of bar-like design.

4. Apparatus according to one of Claims 1 to 3, it being the case that at least two retaining means (28, 29) can be moved on a continuous circulatory path in each case.

5. Apparatus according to Claim 4, it being the case that the retaining means (28, 29) are arranged on both sides of the product group (10), the circulatory paths are arranged symmetrically to a vertical centre plane (35) through the product group, and corresponding retaining means (28, 29) of each circulatory path execute movements symmetrical to said centre plane (35).

6. Apparatus according to Claim 4 or 5, it being the case that the retaining means (28, 29) assigned to a circulatory path can be moved relative to one another.

7. Apparatus according to one of Claims 4 to 6, it being the case that the circulatory paths are circular.

8. Apparatus according to one of Claims 1 to 7, it being the case that guide means (30) are arranged on the longitudinal sides of the product groups (10).

9. Apparatus according to one of Claims 1 to 8, it being the case that the retaining means (28, 29) are driven by a servomotor or by a motor with toothed belts.

10. Apparatus according to one of Claims 1 to 9, it being the case that a plurality of transporting arrangements (23) are arranged one beside the other for the purpose of simultaneously filling a plurality of containers (13), arranged one beside the other, with a product group (10) in each case.

## Revendications

1. Dispositif sur une machine d'emballage, pour placer des groupes (10) de produits (11) en forme de disques, debout sur leur tranche, en particulier des biscuits, dans des récipients (13), comprenant des moyens de support frontaux (16, 18) qui peuvent être adaptés à la longueur des groupes, **caractérisé en ce que** le dispositif présente un dispositif de transport (23) qui comprend des moyens de fixation (28, 29) mobiles, s'étendant le long du groupe de produits, des premiers moyens de fixation (28) portant dans une première phase le groupe de produits (10) lors du mouvement descendant, et des deuxièmes moyens de fixation (29) guidant le groupe de produits (10) dans sa région supérieure pendant au moins une partie du mouvement descendant, et pouvant les pousser vers le bas.

2. Dispositif selon la revendication 1, dans lequel les moyens de fixation (28, 29) exercent en alternance, vers le bas la fonction de support, ou vers le haut la fonction de guidage.

3. Dispositif selon la revendication 1 ou 2, dans lequel les moyens de fixation (28, 29) sont réalisés en forme de barres.

4. Dispositif selon l'une quelconque des revendications 1 à 3, dans lequel au moins deux moyens de fixation (28, 29) peuvent se déplacer chacun sur une trajectoire périphérique fermée.

5. Dispositif selon la revendication 4, dans lequel les moyens de fixation (28, 29) sont disposés de part et d'autre du groupe de produits (10), les trajectoires périphériques sont disposées symétriquement par rapport à un plan médian vertical (35) à travers le groupe de produits et des moyens de fixation correspondants (28, 29) de chaque trajectoire périphérique réalisent des mouvements symétriques par rapport à ce plan médian (35).

6. Dispositif selon la revendication 4 ou 5, dans lequel les moyens de fixation (28, 29) associés à une trajectoire périphérique sont déplaçables les uns par rapport aux autres.

7. Dispositif selon l'une quelconque des revendications 4 à 6, dans lequel les trajectoires périphériques sont circulaires.

8. Dispositif selon l'une quelconque des revendications 1 à 7, dans lequel des moyens de guidage (30) sont disposés du côté longitudinal des groupes de produits (10).

9. Dispositif selon l'une quelconque des revendications 1 à 8, dans lequel les moyens de fixation (28, 29) sont entraînés par un servomoteur ou par un moteur à courroie dentée.

10. Dispositif selon l'une quelconque des revendications 1 à 9, dans lequel plusieurs dispositifs de transport (23) sont disposés les uns à côté des autres pour un remplissage simultané de plusieurs récipients juxtaposés (13) avec un groupe de produits (10) respectif.
